# EUROPEAN PATENT SPECIFICATION

(11) **EP 1 490 616 B1**
(45) Date of publication and mention of the grant of the patent: **13.09.2006**
(21) Application number: 03743882.7
(22) Date of filing: 10.03.2003
(51) Int. Cl.: F16K 31/08, F16K 31/06

(54) **SOLENOID VALVE**
MAGNETVENTIL
VANNE ELECTROMAGNETIQUE

(30) Priority: 12.03.2002 IT MI20020524
(43) Date of publication of application: 29.12.2004
(73) Proprietor: Ode Officine di Esino Lario S.R.L., 23823 Colico (IT)
(72) Inventor: PENSA, Carlo, Maria, I-23825 Esino Lario (IT)
(74) Representative: Riccardi, Sergio
(86) International application number: PCT/EP2003/002632
(87) International publication number: WO 2003/076836

(56) References cited:
- EP-A- 1 008 790
- EP-B- 0 650 002

## Description

Solenoid valves are well known devices for the control of fluids' passage essentially consisting of a valve body comprising inlets and outlets of the same fluid and a chamber with a port which is closed by a shutter controlled by a plunger which moves itself into a steeve returned by the electromotive force generated by the coil to close itself along a magnetic circuit consisting of a skirt outside the coil and of a fixed core coaxial to the plunger.

The planning solutions are many and of different types.

One of the biggest problems regards the fixing of the sleeve-coil system to the valve body usually carried out with two main solutions: the first consists in fixing the sleeve, carrying the fixed core, to the body either tightening it or with other appropriate systems and thus to assemble the coil on the sleeve by fixing it also with appropriate systems. The second consists in fixing the coil to the valve body with screws or other devices and in making the latter to hold the sleeve; therefore said sleeve can either be made directly on the coil's body or be separated. These solutions require expensive procedures and very precise allowances so that the various needed couplings keep acceptable limits in the resulting travel of the plunger.

A solenoid valve of this kind is disclosed in document EP 0 650 002 B1, in which the sleeve-coil system, comprising several elements, is fixed to the valve body through a fitting bolt screwed into a set nut, thus requiring to accurately set all the allowances between the elements forming the sleeve-coil system and between said system and the valve body.

The present invention easily solves these problems by allowing the recovery of many allowances and thus economic and assembling savings.

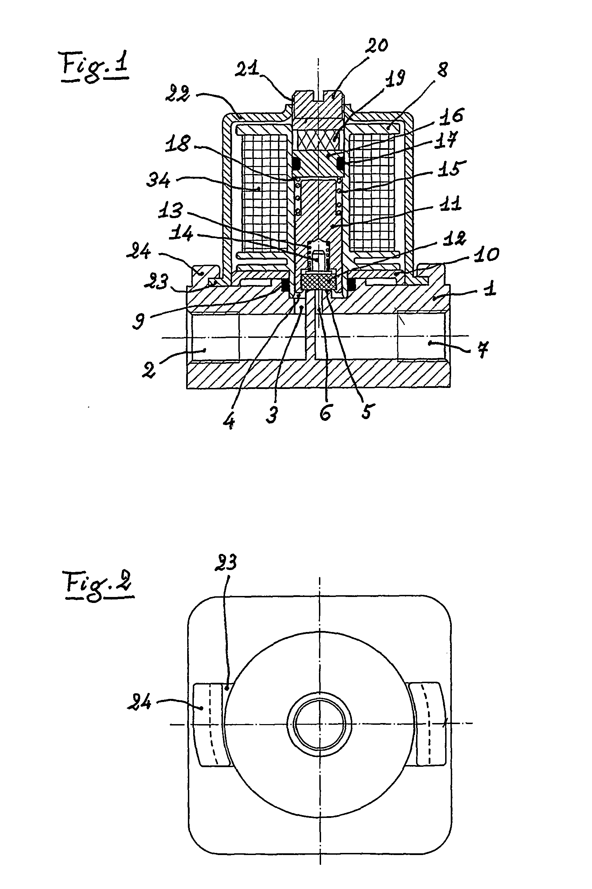

Two possible solutions are illustrated in the figures 1, 2, 3, and 4:
Figures 1 and 2 are a top and an elevation section respectively of a Solenoid valve called bistable that has a permanent magnet inside the magnetic circuit so that the impulse energizing action of the coil with direct current applied in one direction couples the plunger to the fixed core and opens the passage of the fluid and with an opposite sign impulse causes the release of the plunger which closes the passage of the fluid through the port;

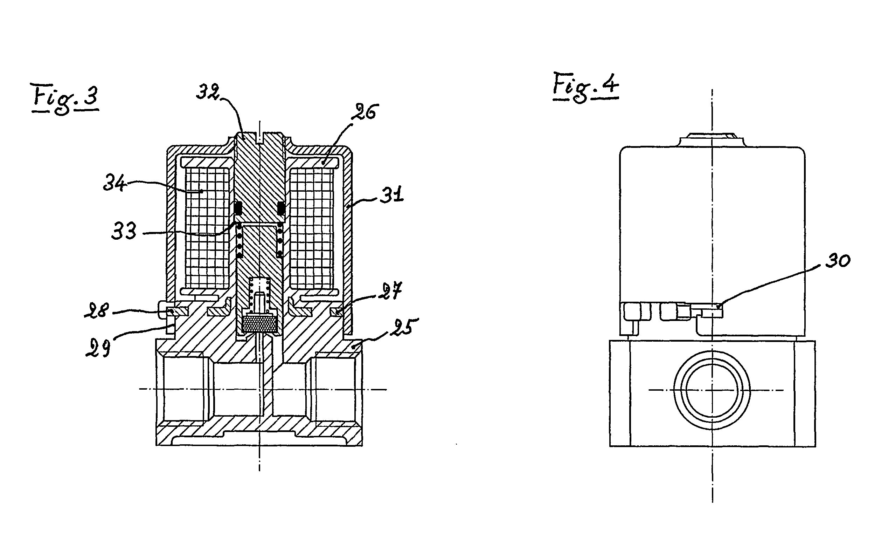

Figures 3 and 4 are an elevation section and a side view respectively of another solution of the traditional kind wherein the plunger with a de-energized coil, closes the fluid passage through the port with the shutter while when the coil is energized it opens the same passage.

Both solutions are characterized by a sleeve separated from the fixed core, a coil, an outer skirt, with a fast coupling on the valve body, wherein the fixed core is housed and tightened and which bucks on an appropriate housing of the same sleeve so as to force the outer skirt on their fast coupling housings and the sleeve with the bobbin on the valve body making everything solid and free of plays.

Referring to figure 1, the valve body is indicated with the number 1 wherein the inlet 2, the passage 3 to the chamber 4 of the port 5 which on its turn puts in communication the outlet 7 through the hole 6 are housed.

In the chamber of the port, the sleeve with the bobbin 8 of the coil sealed by the gasket 9 is housed and stopped; said sleeve with the bobbin leans outside on the plate 10 of the magnetic circuit; inside the sleeve the plunger 11 slides wherein the housing of the shutter 12 is made, and held by the spring 13 that acts on the spring pusher 14; the plunger 11 is pushed on its turn to close the port through the shutter by the spring 15 which bucks with the fixed core made in this case by three parts: the first part 16, of magnetizable material, carries the gasket 17 and stops and bucks on the step 18 of the sleeve-bobbin; the second part 19 is formed by a permanent magnet, and the third part 20, of magnetizable material, carries the thread 21 which engages into the outer skirt 22 by guaranteeing an excellent magnetic closure.

Said skirt, which closes the circuit through the plate 10, is coupled through two wings 23 and appropriate joints 24 made into the valve body 1.

The shape of the skirt is not essential. It could be circular but it could also have an open shell.

It is easily understandable how simple the assembly of the valve is and how, once the skirt is coupled by tightening the plunger 20, an opposition is made between the skirt and the sleeve so that the same skirt remains firmly coupled to the valve body and the sleeve-bobbin is forced to stop by the fixed core which is carried out by the step 18 of the same sleeve.

It is also obvious how this system easily allows the use of a core in three pieces made integral by the assembly itself.

Another interesting solution is shown in figure 3 where the valve body 25 is made of plastic integral with the sleeve-bobbin 26 and has a plate embedded inside of it for closing a magnetic circuit 27 which carries the projections 28 outside of the circumference 29 wherein corresponding slots 30 are coupled to them made into the outer skirt 31 so as to guarantee the coupling and the closure of the same circuit; in the figure the fixed core 32 is made of a single piece and always finds opposition on the step 33.

In both figures the winding, generally indicated with the number 34, will carry the cables or the fast-on connectors, not shown, for the electrical connection.

Even in the solution described in figure 3 the assembly reveals itself to be very simple, the costs are modest and the guarantee of the travel of the plunger is exclusively connected to the allowance of the same core and of the sleeve only.

## Claims

1. A solenoid valve basically made of a valve body (1; 25), comprising outlet (7) and inlet (2) of the fluid and a chamber (4) with a port of interception (5), a coil (34), a sleeve (8; 26), a plunger (11), a fixed core (16, 19, 20; 32) and an outer skirt (22; 31), said sleeve (8; 26), wherein the plunger (11) slides, being provided with a step (18; 33) where the fixed core (16, 19. 20; 32) acts on tightened into said outer skirt (22; 31) of the coil (34), **characterized in that** the tightening of the fixed core (20; 32) causes the outer skirt (22; 31) to be coupled with the valve body (1; 25) through one or more wings (23) with appropriate joints (24) made into the valve body (1).

2. A solenoid valve basically made of a valve body (1; 25), comprising outlet (7) and inlet (2) of the fluid and a chamber (4) with a port of interception (5), a coil (34), a sleeve (8; 26), a plunger (11), a fixed core (16, 19, 20; 32) and an outer skirt (22; 31), said sleeve (8; 26), wherein the plunger (11) slides, being provided with a step (18; 33) where the fixed core (16, 19, 20; 32) acts on tightened into said outer skirt (22; 31) of the coil (34), **characterized in that** the tightening of the fixed core (20; 32) causes the outer skirt (22; 31) to be coupled with the valve body (1, 25) through the engagement of one or more projections (28) in the outer skirt (31) with corresponding housings in the form of slots (30) made into the valve body (25).

## Patentansprüche

1. Magnetventil, das im Wesentlichen aus einem Ventilkörper (1; 25) gebildet ist, umfassend einen Auslass (7) und einen Einlass (2) für das Fluid und eine Kammer (4) mit einer Auffangöffnung (5), eine Spule (34), eine Buchse (8; 26), einen Kolben (11), einen feststehenden Kern (16, 19, 20; 32) und eine Außeneinfassung (22; 31), wobei die Buchse (8; 26), in welcher der Kolben (11) hin- und hergleitet, mit einem Absatz (18; 33) versehen ist, an welchem der feststehende Kern (16, 19, 20; 32) ein Festspannen in der Außeneinfassung (22; 31) der Spule (34) bewirkt, **dadurch gekennzeichnet, dass** das Festspannen des feststehenden Kerns (20; 32) die Außeneinfassung (22; 31) veranlasst, mit dem Ventilkörper (1; 25) durch einen oder mehrere Flügel (23) mit geeigneten Verbindungen (24), welche in dem Ventilkörper (1) gebildet sind, verbunden zu werden.

2. Magnetventil, das im Wesentlichen aus einem Ventilkörper (1; 25) gebildet ist, umfassend einen Auslass (7) und einen Einlass (2) für das Fluid und eine Kammer (4) mit einer Auffangöffnung (5), eine Spule (34), eine Buchse (8; 26), einen Kolben (11), einen feststehenden Kern (16, 19, 20; 32) und eine Außeneinfassung (22; 31), wobei die Buchse (8; 26), in welcher der Kolben (11) hin- und hergleitet, mit einem Absatz (18; 33) versehen ist, an welchem der feststehende Kern (16, 19, 20; 32) ein Festspannen in der Außeneinfassung (22; 31) der Spule (34) bewirkt, **dadurch gekennzeichnet, dass** das Festspannen des feststehenden Kerns (20; 32) die Außeneinfassung (22; 31) veranlasst, mit dem Ventilkörper (1; 25) durch den Eingriff von einem oder mehreren Vorsprüngen (28) in der Außeneinfassung (31) mit entsprechenden Gehäusen in Form von Schlitzen (30), welche in dem Ventilgehäuse (25) gebildet sind, verbunden zu werden.

## Revendications

1. Vanne à solénoïde constituée essentiellement d'un corps de vanne (1; 25), comprenant la sortie (7) et l'entrée (2) du fluide et une chambre (4) avec un orifice d'interception (5), une bobine (34), un manchon (8; 26), un plongeur (11), un noyau fixe (16, 19, 20; 32) et une collerette externe (22; 31), ledit manchon (8; 26) dans lequel le plongeur (11) coulisse présentant un gradin (18; 33) sur lequel le noyau fixe (16, 19, 20; 32) agit lorsqu'il est serré dans ladite collerette externe (22; 31) de la bobine (34), **caractérisée en ce que** le serrage du noyau fixe (20; 32) amène la collerette externe (22; 31) à être couplée avec le corps de vanne (1; 25) par une ou plusieurs ailettes (23) avec des joints appropriés (24) réalisés dans le corps de soupape (1).

2. Vanne à solénoïde constituée essentiellement par un corps de vanne (1; 25), comprenant la sortie (7) et l'entrée (2) du fluide et une chambre (4) avec un orifice d'interception (5), une bobine (34), un manchon (8; 26), un plongeur (11), un noyau fixe (16, 19, 20; 32) et une collerette externe (22; 31), ledit manchon (8; 26), lorsque le plongeur (11) coulisse, étant pourvu d'un gradin (18; 33) sur lequel le noyau fixe (16, 19, 20; 32) agit en étant serré dans ladite collerette externe (22; 31) de la bobine (34), **caractérisée en ce que** le serrage du noyau fixe (20; 32) amène la collerette externe (22; 31) à être couplée avec le corps de vanne (1; 25) par l'engagement d'une ou de plusieurs saillies (28) avec des logements correspondants sous la forme de fentes (30) ménagées dans le corps de vanne (25).
